# EUROPEAN PATENT SPECIFICATION

(11) **EP 2 795 055 B1**
(45) Date of publication and mention of the grant of the patent: **10.01.2018**
(21) Application number: 12830562.0
(22) Date of filing: 19.12.2012
(51) Int. Cl.: E21B 41/00

(54) **AN INTEGRATED SYSTEM FOR OFFSHORE INDUSTRIAL ACTIVITIES WITH FUME INJECTION**
INTEGRIERTES SYSTEM FÜR INDUSTRIELLE OFFSHORE-TÄTIGKEITEN MIT RAUCHEINSPRITZUNG
SYSTÈME INTÉGRÉ POUR ACTIVITÉS INDUSTRIELLES OFFSHORE AVEC INJECTION DES GAZ DE FUMÉE

(30) Priority: 21.12.2011 NO 20111770
(43) Date of publication of application: 29.10.2014
(73) Proprietor: International Energy Consortium AS, 0258 Oslo (NO)
(72) Inventor: MYHR, Gunnar, 1676 KRÅKØY (NO)
(74) Representative: Plougmann Vingtoft a/s
(86) International application number: PCT/NO2012/000068
(87) International publication number: WO 2013/036132

(56) References cited:
- EP-A1- 1 004 746
- WO-A1-2006/097703
- WO-A1-2011/077106
- WO-A2-99/64719
- WO-A2-2004/010568
- WO-A2-2009/120779
- WO-A2-2009/121008
- GB-A- 2 111 602
- NO-B1- 332 044
- US-A1- 2007 237 696
- US-A1- 2007 237 696
- US-A1- 2008 141 672
- US-A1- 2009 100 754
- US-A1- 2011 067 302
- US-A1- 2011 245 937
- 'Appendix C: Large-Scale Integrated Projects' THE GLOBAL STATUS OF CCS: 2011 2011, CANBERRA, AUSTRALIA, pages 109 - 121, XP055155985

## Description

This invention is related to systems for offshore or land based industrial activities which use for feedstock or produce gas, crude oil and/or refined petroleum products/components, and provide reservoir injection of fume gases, can receive and store CO₂ or flue gases from other offshore or onshore industrial processes or hydrocarbon producing entities, and can provide industrial products, the generation and transmission of electric power and communications between the various elements or units within a defined network or grid.

### Background and definitions

Crude oil is a complex mix of various hydrocarbon elements. Molecular chains with hydrocarbons (HC) containing up to 4 carbon atoms are usually gases, between 5 and 19 carbon atoms are usually liquids, while those molecules containing more than 20 hydrocarbons are solids.

Refining processes uses chemicals, catalysts, heat or pressure to separate and combine basic types of hydrocarbon molecules which naturally occurs in crude oils into groups of such molecules. Such groups are labeled components. Examples of such components are naphtha, kerosene, gas oil or distillates. Components are further processed to become refined products like gasoline(s), diesel, heating oils etc.

Due to the development of different consumption patterns than what is represented by the yield from basic atmospheric distillation, several upgrading technologies have been developed. Upgrading occurs by thermal and/or catalytic cracking or physical up breaking of long molecules to less, and in this way enabling the produce of relatively more of high valued final products like gasoline and diesel and less of heavy fuel oils. Cracking and upgrading are synonymous terms. Upgrading facilities are industrial processes that provide cracking.

In this context "crude oil" and "oil" are synonymous concepts. In a standard combustion processes involving air and hydrocarbons, the results or fume mixes will normally contain 70 - 75 % N₂, 10 - 15 % O₂, 5 - 10 % CO₂, 1 % Ar and small amounts of NO and NO₂. The terms "fume gases", "flue gases" and "gas mixture" are defined as synonymous terms. The term "gas" represents any combination of the gasses methane, ethane, propane, butane and the terms Natural Gas Liquids (NGL) and condensate. The concept "natural gas" is a mixture of methane and condensate. Condensate is NGL (Natural Gas Liquids) and hexane, heptane and octane. NGL is LPG (Liquid Petroleum Gas) and ethane and pentane. LPG is a mix of propane and butane. Natural gas can contain CO₂, N₂ and sulfide in addition to "gas". "Gas" and "natural gas" are synonymous terms.

The term "offshore" represents a device, structure or installation located on, within or at the bottom (subsea) of water. Equivalently, "onshore" represents any device located not on, within or under water (subsea).

The terms "inject" and reinject" are synonymous terms.

Activities which may be parts of a total operational unit constituting an installation with industrial activities as discussed herein, like living modules, drilling modules or industrial activities which use refined products/components or gas as feedstock to generate (simple) heat, steam, petrochemical or fertilizer products, are not discussed in any detail as long as these processes are viewed as trivial, and well known for the skilled person in the arts.

Electric power generation by combined cycle processes and heat and/or steam generated in conjunction with such processes, are discussed in this document.

### Prior art

The closed known prior art is NO 332044 (Myhr) which describes a system for integrated production of electric power from an offshore gas power plant with local gas production and reservoir injection of fume gases, and where the power is transported to consumers.

WO 2005/007776 (Olsvik & Moljord) describes a method for enhanced oil recovery - EOR for the production of heavy or extra heavy crude oil. The method represents a process involving the simultaneous reforming of natural gas to produce hydrogen, CO₂ and steam. Steam, or in combination with CO₂, will be injected into the reservoir to stimulate EOR or a partial refining of the crude oil will occur with the help of hydro processing to reduce the viscosity to the heavy crude oil.

WO 03/018958 (Olsvik et al), WO 03/018959 (Olsvik et al), WO 2004/055323 (Olsvik et al). All the documents represent methods for EOR, combining the simultaneous steps; air is separated into O₂ and N₂, the nitrogen fraction will be injected into reservoirs for pressure support, O₂ will be combined with a natural gas source and by a reforming process and it will be converted into syngas. Syngas is primarily composed of the gasses H₂, CO, and steam. Syngas is used in methanol production and other oxygenized hydrocarbon reactions.

WO99/64719 (Lia et al) describes a process to establish a gas mixture representing N₂, CO₂, NOₓ, natural organic compounds and 0-2.0 mol % O₂ from a oxygen rich fume gas.

NO 316545 (Breivik) Describes a system for the production and transportation og crude oil and associated gas from an offshore field, represented by two loading/unloading stations where crude oil/condensate and gas can be conveyed to vessels, and where CO₂ can be transported from the ships and applied as pressure support. A necessity is that the vessels are fitted with heat exchangers.

WO9421512 (Noble & Bernard) describes a methane to methanol conversion process on an offshore platform, with offloading to a ship.

As evidence of uniqueness, novelty and inventive step of this invention, all prior art taken into account, Det norske Veritas (DnV) introduced its innovative Offshore Power for a New Era - or OPera concept on September 18, 2012, ref.: http://www.dnv.com/binaries/Opera%20brochure_tcm4-527124.pdf.

The concept outlines a combined cycle gas powered system for offshore application. There are, among several other aspects, no fume control, reinjection or integrated controls involved. WO2004/010568A2 discloses an invention relating to the generation of substantially pollution free energy by utilizing hydrocarbons to create electrical energy, while reinjecting exhaust fumes or other byproducts into a subterranean formation. Thus, remote, low reserve oil and gas fields may be exploited and produced without requiring the construction of expensive gas transmission lines.

The invention is defined by the independent claims. Particular embodiments of the invention is set out in the dependent claims.

### Invention

The primary objective of this invention is to establish integrated systems which detect, measure and control the demand, generate electric power accordingly, based on combustion of gas by a combined cycle combustion process, and provide the optimization (minimization) of O₂, enabling the reinjection of the fume gases into producing HC reservoirs, thus provide pressure support for enhanced HC recovery, if desirable. Associated heat and/or steam production can facilitate other activities on the installation. The integrated system will control the supply of electric power to a grid or network, offshore and/or onshore.

The system can produce and transport crude oil. The grid or network can include other offshore or onshore HC producing facilities.

Gas, refined products and refined components are any combinations of hydrocarbons (HC) which contain molecular chains containing up to 20 carbon atoms. The terms, definitions and phrases related to e.g. crude oil, gas, refined products, components, fume gas, flue gas mentioned in the "Background and definition", "Prior art" sections and in the figures, also apply as basis for the actual invention represented by this document.

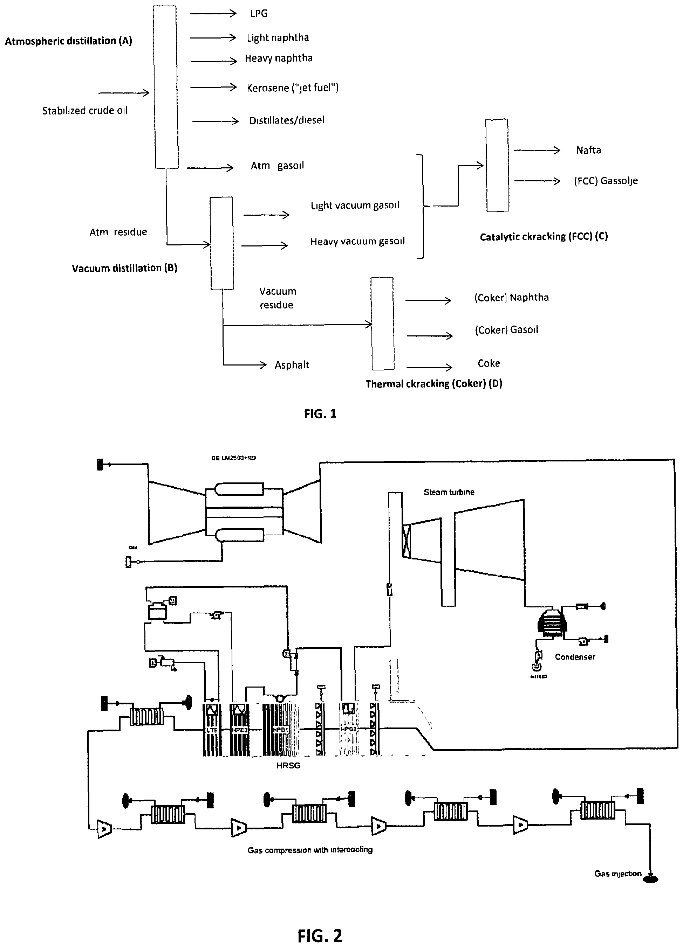

The present invention is e.g. exemplified by the figures 1-6. Figure 1 represents a typical modern refinery, represented by an atmospheric distillation unit (A) and a vacuum distillation unit (B). Atmospheric, light and heavy gas oil can be used as feedstock in catalytic upgrading processes (cracking) (C), while vacuum residue can be used as feedstock into thermal upgrading processes (cracking) (D). Other elements which normally supplement refining processes, which are not labeled in figure 1, are, but are not limited to; super fractioning, absorption processes, solvent extraction, naphtha reforming, polymerization, isomerization, desulphurization. For more info, see e.g. "Refining Process Handbook", S. Parkash, Elsevier, 2003.

Figure 2 describes a flow diagram outlining a combined cycle power plant. It constitutes a gas turbine (e.g. LM2500+), heat recovery steam generator - HRSG (or boiler unit), steam turbine, condenser, (multiple step) compressor unit (with inter-cooling) and facilities for gas injection. An electric power generator, which is a necessity in electric power generation, is not included in the drawing. This can be a separate unit or it can be integrated within the gas turbine and/or steam turbine.

Increase efficiency in the whole combined cycle process can be increased by combinations of fogging (the gas turbine) and wet compression (in the compression steps). For further reference see e.g. Journal of Phys. Sc. Vol. 6(4), 2011, Journal of Eng. for Gas Turb. & Power Vol. 135 (1), 2006, www.offshore-technology.com/contractors/power/mee-industries and www.axenergy.ch.

By manipulating with the combined cycle process, where the flue gas from the gas turbine is used in a closed loop in subsequent combustion processes, it is possible to obtain O₂ levels <<1 %. By utilizing high pressure in the HRSG or boiler unit and fuel with gas (e.g. pure CH₄), O₂ levels could become at the ppm level. In this way the fume could constitute (by volume or weight) (approximately) 87 % N₂, (approximately) 12 % CO₂, small amounts of Ar (approximately 1 %) and NOₓ. The O₂ levels could be optimized to fit economics and reservoir characteristics. In some instances it would be minimized (to ppm levels or << 1%), in other circumstances it would be represented by several % - points. Thus the fume gas, for any practical purposes, would represent a mix of CO₂ and N₂. Within operational temperatures and pressure related to reinjection of flue gases into reservoirs, the CO₂ fraction would become a liquid and N₂ would represent immiscible pressure support for HC flows from reservoirs, and subsequent could enhanced HC production.

### Example

The application of a theoretical combined cycle gas power plant for the Goliat field (Norway).

### Field data

Recoverable oil reserves: 28 mill. Sm³ - 174 mill. bbl.
Natural gas reserves: 8 mrd. Sm³ - 50 mill. boe
Plateau oil production: 1.7 mill. Sm³/year - 29300 b/d
Plateau gas production: 0.41 mrd Sm³/year - 7000 boe/d (est.)

### Chosen solution (The field will become operational in 2013)

Oil and associated natural gas (NG) is produced from the reservoir "Realgrunnen". Crude oil is offshore loaded while the NG is reinjected (deposited) into the neighboring "Kobbe" reservoir structure.

To support total field operations, electric power will on a 50/50 basis be produced offshore by a GE LM2500+ gas turbine and imported from a land grid through a land/ offshore subsea cable.

Electric demand at the plateau phase is approximately 50 - 60 MW.

The following is a theoretical alternative combined cycle solution based on figure 2.

The LM 2500+ generate 32 MW with 38 % efficiency. The fume gas mix from this unit alone is 5 % CO₂, 74 % N₂, 15.5 % O₂ + other (Ar, NOₓ). The O₂ content is too high for hydrocarbons in reservoirs.

Design reservoir pressure for reinjection is 15 MPa.

By adding a total combine cycle process, where a steam turbine and a steam generator (boiler unit) is designed to fit the LM2500+ unit (fume volumes), an adequate fume mix of 11.4 % CO₂, 86.9 % N₂ and 0.6 % O₂ is obtainable.

**Table 1**

| | | |
|---|---|---|
| Net fuel input | [MW] | 248 |
| **Gas turbine (LM2500+)** | **[MW]** | **32** |
| Steam turbine | [MW] | 63 |
| Gross power | [MW] | 96 |
| Compressor*) **) | [MW] | -51 |
| Aux | [MW] | -2 |
| Net power **) | [MW] | 43 |
| **Net electric efficiency**)** | **[%]** | **17** |

| | | |
|---|---|---|
| **) Based on 150 bar*- *15 MPa reservoir pressure.* ***) by taking the static pressure of a 1500 m fume (gas) column into account, it represents a topside pressure reduction of 3.5 MPa or 5MW less compression power.* Calculations based on setup outlined in figure 2 | | |

After compression, net power would be in the 40 - 45 MW range and electric efficiency would be approx. 17 %.

By adding wet compression and fogging, net power output can increase to 50 - 55 MW and electric efficiency (after compression) can increase to 20 - 22 %.

### Economic calculations

GE LM 2500+ gas turbine consumes 155 tonnes (of NG)/day (1340 boe/day). Based on NG consumption of 155 tonnes/day => 0.17 mill. tonnes of CO₂/year;
=> NOK 70 mill. in CO₂ taxes/year (based on NOK 409/tonnes) 30 MW imports of land based electric power;
=> 370 mill. kWh or NOK 100 - 150 mill./year [NOK 0.27 - 0.40/kWh]

**Table 2**

| **Field** | **EOR Appl.** | **Recovery (fraction OHIP)** |
|---|---|---|
| Hawkins | Gravity drainage | 0.20 |
| Chunchula | Pressure maintenance | 0.31 |
| Block 31 Szeged | Miscible displacement | 0.6 (total) |
| Moravaros | Pressure maintenance | 0.12 |
| Jay/(LEC) | Miscible displacement | 0 13 |
| Lake Barre Fordoche | Pressure maintenance | 0.19 |
| Wilcox8 & 12 Fordoche | Miscible displacement | 0.195 |
| Wilcox 5 | Pressure maintenance | 0.19 ....0.46 |
| Field B* Anschutz | Immiscible displacement | 0.36 |
| Ranch East | Pressure maintenance | 0.45...53 |

| | | |
|---|---|---|
| Source: Shame, J and Holtz, M Reserve Growth & Higher Recovery Using Nitrogen Gas Injection, Praxair, Inc., Wyoming EOR/IOR Conference, 2008. Some empirical data regarding enhanced recovery rate by N₂ injection. | | |

Investments of the total system - USD 90 mill = NOK 550 mill.
□ Cost savings/income from CO₂ taxes/ and power purchase => NOK 170 - 220 mill./year or more.
□ Fume (N₂ + CO₂) injection into "Realgrunnen" could subsequently increase production by 20 %-points and prolonged life span for the field?

Several approaches have been proposed to extract (most of) the CO₂ from the flue gas (mixture), named carbon capture (and storage) or CCS. The concept is to dispose only the fraction of the fume containing CO₂ rather than the total flue volumes. This for practical and economic reasons. The various approaches can be labeled as post-combustion, oxy-fuel combustion or phase separation. The various techniques which can be utilized are among chemical (amine) solvents, physical solvents, physical absorbents, membrane separation processes, chemisorption, chemical bonding, phase separation.

For a more thorough discussion of various CCS approaches, see e.g. http://gcep.stanford.edu/pdfs/assessments/carbon capture_assessment.pdf

A major problem with CCS is to obtain economic feasible solutions.

I this context the term CCS represents any combination of the above stated approaches and techniques for the capturing (a mixture containing large proportions of) CO₂.

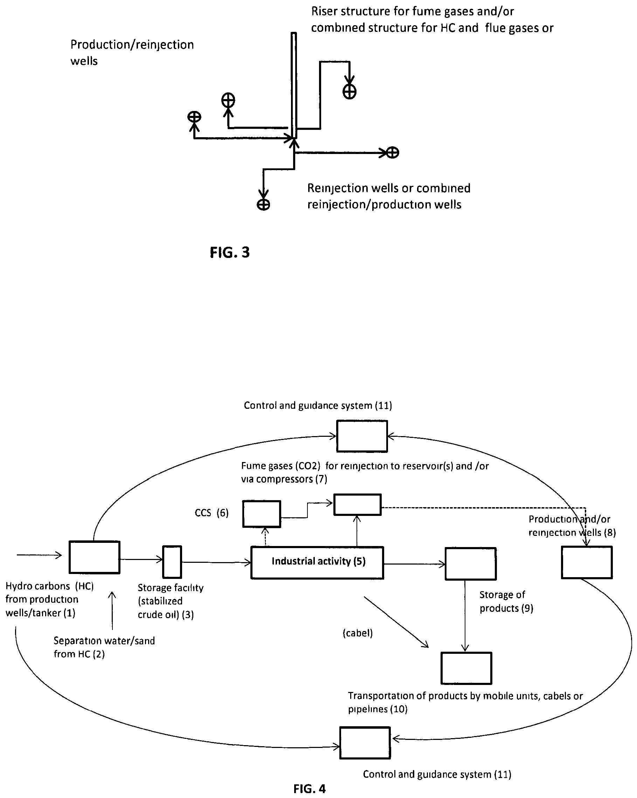

Figure 3 shows production and/or reinjection wells and risers for hydrocarbons (oil and/or gas) and fume gases (CO₂) from combustion processes associated with offshore or onshore industrial activities and/or HC production. In addition to the disposal of self generated fume mixes to reservoir(s), the system can handle or inject fume or CO₂ (mixtures) transported from other industrial activities on land or offshore into reservoir or caverns (depository facilities). This includes fume mixes or CO₂ (mixtures) from coal, oil (heavy fuel oils), gas power plants and HC producing units both onshore or offshore. The fume gases can be transported by combinations of pipelines and mobile units like trucks, rail tanks or ships. Risers can simultaneously lead the flue gases down into reservoirs or caverns and hydrocarbons up from producing reservoirs. Risers will then have separate tubes or channels, separating the fume gases and the hydrocarbons. Risers can be rigid or flexible. Production and reinjection wells can be the same or they can be separate. Injection of fume gases and production of hydrocarbons can be from the same reservoir(s) or the processes can involve different structures or reservoirs.

Normally will risers lead fume gases down into a reservoir. To the degree that the system dispose transported or received a gas mixture (CO₂) from other industrial activities or HC producing units via pipeline or other means of transportation, the fume gases can be transported directly to reservoir via subsea subsystems or modules. The flue gases can be filtered or cleansed from fixed particles, but not necessarily.

To the degree the total system also produces crude oil in addition to gas, crude oil and gas will have to be fractioned or separated and the crude oil will have to be stabilized. The at least one industrial activity will primarily, but not necessarily, be represented by modules. The at least one such industrial activity is either fixed or locates on solid ground (onshore), or located on one or several fixed or floating (offshore) installations. Floating units can be founded on pontoons (semi submersible), can be moored or anchored by tension legs. The installation or platform can be made of combinations of concrete, metals (steel), epoxy, kevlar, fibers, matrixes, synthetic materials, composites, fiber glass and the like.

Figures 4, 5 and 6 provide an integrated system for industrial activities which produce HC or use gas or refined components/products as feedstock. With reference to figure 4, stabilized crude oil or refined products/components or a gas is transported from a mobile unit (tanker) or by pipeline or from a riser from underground reservoir(s) or (subsea) well(s) (1). If hydrocarbons containing crude oil are locally produced, it would have to be fractioned and stabilized by separating water, sand and gas(es) (2). Stabilized crude oil, refined products/components or gas can be placed in a storage facilities (3) or transported offshore or onshore by ships or pipeline (10). These storage facilities (3, 9) can be placed or facilitated at ground based, floating, fixed or subsea units or be represented by an underground caverns or offshore/onshore reservoir(s).

The industrial facility (5) can be represented by a distillery unit of atmospheric and/or vacuum type, and/or it can also be represented by at least one catalytic and/or thermal upgrading unit, as outlined in Figure 1. Such units can be represented by, but not limited to, combinations of fluid catalytic cracking, coking, visbreaking, hydro cracking, in addition to combination of units which represent super fractioning, absorption processes, solvent extraction, crystallization, naphtha reforming, polymerization, isomerization, desulphurization (not shown on the figures).

The industrial activity (5) can be represented by a combined cycle (CC) power unit as outlined in Figure 2. It would be represented by at least one gas turbine and at least one steam turbine, require at least one boiler unit (steam generator), and at least one electric power generator (not shown). Two or several of the units can be integrated. A preferred solution would include a heat recovery steam generator, as outlined in Figure 2, together with at least one condenser. If a CC unit represents or is part of the industrial facility, a high performance (multiple) step compressor unit could be integrated within the CC sub - system (7). The CC unit can be fueled by any combination of refined products, components or gas, but preferably pure methane.

The CC unit will be integrated by at least one control system (11). The control system will with the use of sensors (not shown on figures 2 and 4), measure, control and adjust the fume mixture (7) according to defined or predetermined levels before injection into wells (8). The monitoring of O₂ levels in the flue gas (7) are of particular importance.

An electric power generator will normally produce AC current. Consumption and the transmission of electric power can be done both in the form of AC or DC current. If AC power is produced and DC power is required for either consumption or in the transmission phase, converters would be required (not shown).

Parts of the electricity, heat and/or steam can be used to drift the power unit.

The fume gases could be channeled via a carbon capture (CCS) unit (6) for the (partial) removal of CO₂. In this eventuality, it would be most likely that only the fraction containing CO₂ would be reinjected into wells or storage facility (8), and N₂ (and small amounts of other gases) would be released to the atmosphere (not shown on figures).

At least one systemic control and guidance system (11) will interconnect all subsystems (1 - 10) with the help of sensors (not shown on figures). These sensors will, but are not limited to, the detection (quality and quantity to) pressure, temperature, heat (infrared), frequencies (sound, light), stress, strain, liquid (level), gas (concentrations), one or two phase fluid flows, relative and absolute humidity. Such sensors can be, but are not limited to, analog or digital electronic, electro - mechanical, optical or of ultrasound types. The sensors are connected by wire or wireless communications. Overall coordination of the control system is executed by at least one central processing unit (CPU), which constitute the hub of the at least one control and guidance system (11).

Parts of the electricity, heat, steam produced can be used to drift other parts of the industrial complex (1 - 10). The control system (11) can be partially of totally overturned manually, meaning that at least one of sub - systems or modules (1 - 10) can be manually controlled.

All elements in figures 1 - 6, numbered (1 - 10) (11) can be represented by independent modules for rapid hook up, replacement and/or transportation. Buffer storages (3) and (9) can be represented by mobile units and/or vessels (ships).

Except from electricity, steam or heat, detailed descriptions or drawings of production, storage or offloading facilities of petrochemicals (alcohols, ethylene, propylene, butadiene, benzene, toluene, xylene, plastics, polymers and the like) or fertilizer products [based on nitrogen, phosphate, potassium, compound, binary compound (npk)], which utilizes gas, and/or refined petroleum products/components as feedstock, are not shown on the various figures. In this document, the term "petrochemical" and "fertilizer" can represent any combinations of the above listed products or basis for chemical compounds.

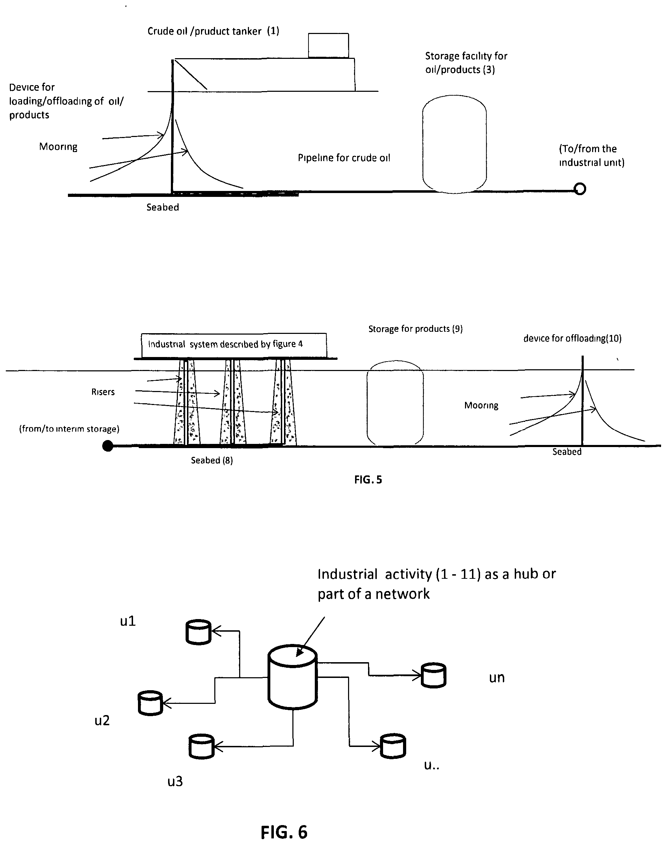

Figure 6 outline the industrial activity (1 - 11) as a hub within a network, where units u₁ to uₙ are representing any of the offshore- or land based industrial activities constituting any of an offshore refinery, an onshore refinery, a melting plant, an offshore power plant powered by any of gas, coal, oil, an onshore power plant powered by any of gas, coal, oil, and an industrial production facility for any of heat, steam, petrochemical products, fertilizer and cement, and any of pipelines and/or electric devices or cables interconnecting the units of the network.

The network or grid can also include combinations of power transmission (10) and/or include fume (CO₂) transportation to/from other offshore or onshore HC producing facilities or installations.

A favourable solution is represented by an integrated system for industrial activities on at least one onshore or offshore location which use as feedstock and/or produce at least one of gas, crude oil, refined hydrocarbon components or products, which system is represented by an installation and constitute at least one storage facility of which fume gases from the industrial activity (8) can be injected, and at least one riser structure for leading the fume gases from the installation to the storage facility, and which are further characterized by;
- the at least one industrial activity is represented by combinations of at least one HC producing installation, at least one distillation unit, at least one upgrading unit, oil refinery, combined cycle electric power plant, production of heat, production of steam, production of at least one fertilizer, production of at least one petrochemical product (5) and at least one pipeline or electric power grid for the transportation of fume gases (CO₂) or industrial products (electric power) to or from the installation from at least one of a) other industrial activity offshore, b) other industrial activity onshore, c) vessel or mobile unit, for the reinjection via at least one riser structure,
- at least one control and guidance system (11), by at least one sensor guiding at least one of the sub-systems of the system (1 - 10), measuring demand for the industrial activity, provide feedstock and/or produce at least one of gas, crude oil, refined hydrocarbon components or products to fuel the at least one industrial activity (combined cycle gas power plant), and control and monitor the reinjection of fume gases from the industrial activity (5) by at least one riser structure for leading the fume gases from the installation to the storage facility in real time, accordingly.

The term "measuring demand" can be combinations of electric power consumption or electric requirements to the grid of which the at least one electric power unit is part of, consumption of heat or steam locally or within the network, defined or predetermined production level of gas, crude oil, refined products and refined components, the delivery or supply of fume gases from the network, defined utilization rate of the CCS unit(s) (6), all taken storage or delivery (supply) facilities/capacities (1, 3, 8, 9, 10) into account.

The et least one combined cycle gas power plant is represented by at least one gas turbine, at least one steam turbine, at least one steam generator (boiler), at least one electric power generator and at least one control system (11) which can monitor and control combustion processes and subsequent fume gases (7) in addition to the measuring and controlling of the at least one gas turbine (5) and wet compression (7). At least two of the stated units can be fully integrated.

The combined cycle process can be fueled by any combination of refined products, components or gas, but the use of methane is preferred, especially in the boiler unit, to obtain the desired or defined fume gas mixture.

A most favorable integrated system can detect and measure the demand, include applying and the control of fogging of the at least one gas turbine (5) and provide and control wet compression (7), generate electric power accordingly by a combined cycle gas combustion process, and provide the optimization (minimization) of O₂, enabling the reinjection of the fume gases (CO₂ + N₂) into producing HC reservoirs, thus provide pressure support for enhanced HC recovery. Associated or integrated heat and/or steam production (from the at least one steam or boiler unit) can facilitate other activities on the at least one installation or distributed to the network (10). The integrated system will control the supply of electric power to the grid or network in question. The control of the system is integrated, coordinated and operated in real time.

The system can further be characterized, but not necessarily, by combinations of:
- At least one of the riser structures is facilitated to lead hydrocarbons up to the at least one installation.
- At least one of the elements of the system (1 - 10) is located subsea.
- At least one of the elements of the system (1 - 10) is represented by an independent module.
- The installation is part of a network of at least one such installation and at least one offshore or land based (onshore) industrial activity where the interconnection constitute combinations of pipelines and power transmission devices or cables.
- The network is represented of combinations of serial, parallel or star type interconnections.
- Pipelines within the network is for the transportation of any among of fume gases, CO₂, refined petroleum products or components, gas, crude oil, heat, steam, and the electric transmission devices or cables are for the transfer of electric power.
- At least one of a) the electric power transmission devices or b) pipelines are useful for the communications by electronic, acoustic or optical signals.
- The at least one of the offshore- or land based industrial activities constitute any of an HC producing installation, an offshore refinery, an onshore refinery, a melting plant, an offshore power plant powered by any of gas, coal, oil, an onshore power plant powered by any of gas, coal, oil, and an industrial production facility for any of heat, steam, petrochemical products, fertilizer and cement.
- Fume gas reinjection to the at least one reservoir, cavern or storage facility is facilitated to be partially or fully closed down.
- The at least one industrial activity or installation is integrated with or can be connected to a unit which can separate or capture part of a fume gas that contains a significant proportion of CO₂ (CCS) (6).
- The at least one control and guidance system (11) can partly or in total be overturned manually against at least one of the sub - systems (1 - 10).

The invention is not limited to the methods and systems described above. The invention is defined by the appended claims. Drawings and figures are to be interpreted illustratively and not in a limiting context.

## Claims

1. System for at least one industrial activity (u1 - un) on at least one onshore or offshore location which use as feedstock and/or produce at least one of gas, crude oil, refined hydrocarbon components or products, where the at least one industrial activity is represented by combinations of at least one hydrocarbon producing installation, at least one distillation unit, at least one upgrading unit, oil refinery, combined cycle electric power plant, production of heat, production of steam, production of at least one fertilizer or production of at least one petrochemical product,
- where the system is arranged for controlling an installation and for handling fume gas from the installation and a network, where the installation comprises several sub-systems (1, 5, 8), where the installation is part of the network which comprises the at least one industrial activity (u1-un) located onshore or offshore and fume transportation from the network, and
- where the system comprises at least one pipeline or electric power grid for the transportation of fume gas or industrial products to or from said installation from at least one of a) other industrial activity offshore, b) other industrial activity onshore, c) a vessel or mobile unit, for the reinjection of the fume gas via at least one riser structure, and an integrating control and guidance system (11) comprising at least one central processing unit and sensors for guiding at least the industrial activity (5) of the sub-systems (1, 5, 8), where the integrating control and guidance system (11) interconnects the subsystems (1, 5, 8) via the sensors, wherein the installation comprises:
- hydrocarbon feedstock from a mobile unit, from storage facilities (3), from a pipeline or from underground reservoir(s) or well(s) (1), and
- an industrial activity (5) for producing a petrochemical product, heat, steam, fertilizer or cement, and
- a storage facility (8) into which fume gas from the industrial activity (5) can be injected,
- at least one riser structure for leading the fume gas from the industrial activity (5) to the storage facility (8), and wherein the integrating control and guidance system (11) is configured to, in real time:
- measure a demand for the industrial activity (5),
- measure a demand for supply of fume gas from the network,
- provide the feedstock from said mobile unit, storage facilities (3), pipeline, or reservoir(s) or well(s) (1) to fuel the industrial activity (5), and
- control and monitor the injection of fume gas from the industrial activity (5) to the storage facility (8) in real time.

2. System according to claim 1,
comprising one of a distillation unit, an upgrading unit, an oil refinery, a device for production of heat, a boiler for generating steam and a system for production of at least one fertilizer.

3. System according to claim 1 or 2, further comprising a combined cycle electric power plant (6).

4. System according to claim 3, wherein
the at least one combined cycle gas power plant (6) comprises a gas turbine, a steam turbine, a steam generator (boiler)and an electric power generator wherein the control system (11) is configured to monitor and control at least one of a) combustion processes and subsequent fume gas (7), b) associated steam production, c) associated heat production, d) fogging of the at least one gas turbine, e) wet compression (7).

5. System according to any preceding claim, further comprising
a riser structures for leading hydrocarbons up to the installation.

6. System according to any preceding claim, wherein
at least one of the sub-systems (1 - 10) is located subsea.

7. System according to any preceding claim, wherein
at least one of the sub-systems (1 - 10) is represented by an independent module.

8. System according to any preceding claim, wherein
the installation is part of a network of at least one such installation and at least one offshore or land based (onshore) industrial activity interconnected by pipelines and/or power transmission devices or cables.

9. System according to claim 8,wherein
the network is any combination of serial, parallel or star type interconnections.

10. System according to claim 8, wherein
pipelines within the network are configured for transport of fume gas, CO₂, refined petroleum products or components, gas, crude oil, heat and/or steam, and the electric transmission devices or cables are configured for transfer of electric power.

11. System according to claim 8, wherein
at least one of a) the electric power transmission devices or b) pipelines are adapted for communication by electronic, acoustic or optical signals.

12. System according to any preceding claim, wherein
the storage facility comprises a reservoir or a cavern, and the control and guidance system (11) is configured to partially or fully close down fume gas injection to the storage facility.

13. System according to any preceding claim, further comprising
CCS unit for capturing a significant proportion of CO₂ in the fume gas.

14. System according to any preceding claim, wherein
at least one of sub - systems or modules (1 - 10) can be manually controlled.

15. A method for controlling an installation and for handling fume gas from the installation and a network,
where the installation and the network is part of a system according to claim 1; the method comprises:
- producing a petrochemical product, heat, steam, fertilizer or cement using an industrial activity (5) of the installation;
- injecting fume gas from the industrial activity (5) into a storage facility (8) using at least one riser structure, wherein the method further comprises performing the following steps using the control and guidance system (11), in real time,
- measuring a demand for the industrial activity (5),
- measuring a demand for supply of fume gas from the network,
- receiving fume gas from the network,
- providing the feedstock from said mobile unit, storage facilities (3), pipeline, or reservoir(s) or well(s) (1) to fuel the industrial activity (5), and
- monitoring the injection of fume gas from the industrial activity (5) to the storage facility (8) in real time, and
- controlling the injection of fume gas from the industrial activity (5) to the storage facility (8) in real time.

## Patentansprüche

1. System für zumindest eine industrielle Aktivität (ul - un) an zumindest einem Onshore- oder Offshore-Standort, die zumindest eines von Gas, Rohöl, raffinierten Kohlenwasserstoffkomponenten oder -produkten als Rohstoff verwendet und/oder produziert, wobei die zumindest eine industrielle Aktivität durch Kombinationen von zumindest einer Kohlenwasserstoff-produzierenden Installation, zumindest einer Destillationseinheit, zumindest einer Veredelungseinheit, Ölraffinerie, Elektrokraftwerk mit kombiniertem Zyklus, Produktion von Wärme, Produktion von Dampf, Produktion von zumindest einem Dünger oder Produktion von zumindest einem petrochemischen Produkt repräsentiert ist,
- wobei das System zum Steuern einer Installation und zum Handhaben von Rauchgas aus der Installation und einem Netzwerk angeordnet ist, wobei die Installation mehrere Untersysteme (1, 5, 8) umfasst, wobei die Installation Teil des Netzwerks ist, das die zumindest eine industrielle Aktivität (ul - un), die sich onshore oder offshore befindet, und Rauchtransport von dem Netzwerk umfasst, und
- wobei das System zumindest eine Pipeline oder ein elektrisches Stromnetz für den Transport von Rauchgas oder industriellen Produkten zu oder von der Installation von zumindest einem von a) anderer industrieller Offshore-Aktivität, b) anderer industrieller Onshore-Aktivität, c) einem Schiff oder einer mobilen Einheit für die Reinjektion des Rauchgases über zumindest eine Riserstruktur und ein integrierendes Steuer- und Führungssystem (11), umfassend zumindest eine zentrale Verarbeitungseinheit und Sensoren zum Führen von zumindest der industriellen Aktivität (5) der Untersysteme (1, 5, 8), wobei das integrierende Steuer- und Führungssystem (11) die Untersysteme (1, 5, 8) über die Sensoren verbindet, umfasst, wobei die Installation Folgendes umfasst:
- Kohlenwasserstoffrohstoff aus einer mobilen Einheit, aus Lagereinrichtungen (3), aus einer Pipeline oder aus einem Untergrundreservoir(s) oder einem Bohrloch/Bohrlöchern (1), und
- eine industrielle Aktivität (5) zum Herstellen von einem petrochemischen Produkt, Wärme, Dampf, Dünger oder Zement, und
- eine Lagereinrichtung (8), in die Rauchgas aus der industriellen Aktivität (5) injiziert werden kann,
- zumindest eine Riserstruktur zum Leiten des Rauchgases aus der industriellen Aktivität (5) zu der Lagereinrichtung (8), und wobei das integrierende Steuer- und Führungssystem (11) dazu ausgelegt ist, Folgendes in Echtzeit durchzuführen:
- Messen eines Bedarfs für die industrielle Aktivität (5),
- Messen eines Bedarfs für Lieferung von Rauchgas aus dem Netzwerk,
- Bereitstellen des Rohstoffs aus der mobilen Einheit, den Lagereinrichtungen (3), der Pipeline oder dem/den Reservoir(s) oder Bohrloch/Bohrlöchern (1), um die industrielle Aktivität (5) mit Brennstoff zu versorgen, und
- Steuern und Überwachen der Injektion von Rauchgas aus der industriellen Aktivität (5) in die Lagereinrichtung (8) in Echtzeit.

2. System nach Anspruch 1,
umfassend eines von einer Destillationseinheit, einer Veredelungseinheit, einer Ölraffinerie, einer Vorrichtung zur Produktion von Wärme, einem Boiler zum Erzeugen von Dampf und einem System zur Produktion von zumindest einem Dünger.

3. System nach Anspruch 1 oder 2, ferner umfassend ein Elektrokraftwerk mit kombiniertem Zyklus (6).

4. Verfahren nach Anspruch 3, wobei
das zumindest eine Gaskraftwerk mit kombiniertem Zyklus (6) eine Gasturbine, eine Dampfturbine, einen Dampferzeuger (Boiler) und einen Stromgenerator umfasst, wobei das Steuersystem (11) dazu ausgelegt ist, zumindest eines von a) Verbrennungsprozessen und nachfolgendem Rauchgas (7), b) assoziierter Dampfproduktion, c) assoziierter Wärmeproduktion, d) Nebeln der zumindest einen Gasturbine, e) Nasskompression (7) zu überwachen und zu steuern.

5. System nach einem der vorstehenden Ansprüche, ferner umfassend
Riserstrukturen zum Leiten von Kohlenwasserstoffen bis zu der Installation.

6. System nach einem der vorstehenden Ansprüche, wobei
zumindest eines der Subsysteme (1-10) sich unterseeisch befindet.

7. System nach einem der vorstehenden Ansprüche, wobei
zumindest eines der Subsysteme (1-10) durch ein unabhängiges Modul repräsentiert ist.

8. System nach einem der vorstehenden Ansprüche, wobei
die Installation Teil eines Netzwerks mit zumindest einer solchen Installation und zumindest einer industriellen Aktivität offshore oder landbasiert (onshore) ist, verbunden durch Pipelines und/oder Stromübertragungsvorrichtungen oder -kabel.

9. System nach Anspruch 8, wobei
das Netzwerk jede Kombination von serieller Verbindung, paralleler Verbindung oder Verbindung vom Sterntyp ist.

10. System nach Anspruch 8, wobei
Pipelines innerhalb des Netzwerks für Transport von Rauchgas, CO₂, raffinierten Erdölprodukten oder -komponenten, Gas, Rohöl, Wärme und/oder Dampf ausgelegt sind, und die elektrischen Übertragungsvorrichtungen oder -kabel zur Übertragung von elektrischer Strom ausgelegt sind.

11. System nach Anspruch 8, wobei
zumindest eines von a) den elektrischen Leistungsübertragungsvorrichtungen oder b) Pipelines für Kommunikation durch elektronische, akustische oder optische Signale angepasst ist.

12. System nach einem der vorstehenden Ansprüche, wobei
die Lagereinrichtung ein Reservoir oder einen Hohlraum umfasst und das Steuer- und Führungssystem (11) dazu ausgelegt ist, Rauchgasinjektion in die Lagereinrichtung teilweise oder vollständig zu beenden.

13. System nach einem der vorstehenden Ansprüche, ferner umfassend
eine CCS-Einheit zum Aufnehmen eines wesentlichen Anteils von CO₂ in dem Rauchgas.

14. System nach einem der vorstehenden Ansprüche, wobei
zumindest eines der Subsysteme oder Module (1-10) manuell gesteuert werden kann.

15. Verfahren zum Steuern einer Installation und zum Handhaben von Rauchgas aus der Installation und einem Netzwerk,
- wobei die Installation und das Netzwerk Teil eines Systems nach Anspruch 1 sind;
wobei das Verfahren Folgendes umfasst:
- Produzieren von einem petrochemischen Produkt, Wärme, Dampf, Dünger oder Zement unter Verwendung einer industriellen Aktivität (5) der Installation;
- Injizieren von Rauchgas aus der industriellen Aktivität (5) in eine Lagereinrichtung (8) unter Verwendung von zumindest einer Riserstruktur, wobei das Verfahren ferner Durchführen der folgenden Schritte unter Verwendung des Steuer- und Führungssystems (11) umfasst, in Echtzeit,
- Messen eines Bedarfs für die industrielle Aktivität (5),
- Messen eines Bedarfs für Lieferung von Rauchgas aus dem Netzwerk,
- Empfangen von Rauchgas aus dem Netzwerk,
- Bereitstellen des Rohstoffs aus der mobilen Einheit, den Lagereinrichtungen (3), der Pipeline oder dem/den Reservoir(s) oder Bohrloch/Bohrlöchern (1), um die industrielle Aktivität (5) mit Brennstoff zu versorgen, und
- Überwachen der Injektion von Rauchgas aus der industriellen Aktivität (5) in die Lagereinrichtung (8) in Echtzeit, und
- Steuern der Injektion von Rauchgas aus der industriellen Aktivität (5) in die Lagereinrichtung (8) in Echtzeit.

## Revendications

1. Système pour au moins une activité industrielle (ul - un) sur au moins un site à terre ou offshore utilisant comme charge de départ et/ou produit au moins un des suivants : gaz, pétrole, composants ou produits d'hydrocarbures raffinés, l'au moins une activité industrielle étant représentée par des combinaisons d'au moins une installation de production d'hydrocarbures, au moins une installation de distillation, au moins une installation de valorisation, une raffinerie de pétrole, une centrale électrique à cycle combiné, la production de chaleur, la production de vapeur, la production d'au moins un engrais, ou la production d'au moins un produit pétrochimique,
- système étant agencé pour la régulation d'une installation et pour le traitement des gaz de fumée d'une installation et d'un réseau, lorsque l'installation comprend plusieurs sous-systèmes (1, 5, 8), l'installation faisant partie d'un réseau comprenant l'au moins une activité industrielle (ul-un) située à terre ou offshore, et le transport de fumées provenant du réseau, et
- le système comprenant au moins une pipeline ou réseau électrique pour le transport de gaz de fumée ou de produits industriels entre ladite installation et au moins un des suivants : a) une autre activité industrielle offshore, b) une autre activité industrielle à terre, c) un navire ou une unité mobile, pour la réinjection de gaz de fumée par le biais d'au moins une structure à colonne montante, et un système intégré de contrôle et guidage (11) comprenant au moins une unité de traitement centrale et des capteurs pour guider au moins l'activité industrielle (5) des sous-systèmes (1, 5, 8), où le système intégré de contrôle et guidage (11) interconnecte les sous-systèmes (1, 5, 8) par le biais des capteurs, l'installation comprenant :
- une charge d'hydrocarbures provenant d'une unité mobile, d'installations de stockage (3), d'une pipeline, ou de réservoirs souterrains ou de puits (1), et
- une activité industrielle (5) pour la production d'un produit pétrochimique, de chaleur, de vapeur, d'engrais ou de ciment, et
- une installation de stockage (8) dans laquelle du gaz de fumée provenant de l'activité industrielle (5) peut être injecté,
- au moins une structure à colonne montante pour amener le gaz de fumée de l'activité industrielle (5) à l'installation de stockage (8), et le système intégré de contrôle et guidage (11) étant configuré pour assurer, en temps réel :
- la mesure d'une demande pour l'activité industrielle (5),
- la mesure d'une demande pour la fourniture de gaz de fumée provenant du réseau
- la fourniture de la charge de départ de ladite unité mobile, d'installations de stockage (3), du pipeline, ou de réservoirs ou puits (1) pour alimenter l'activité industrielle (5), et
- la commande et le contrôle de l'injection de gaz de fumée de l'activité industrielle (5) à l'installation de stockage (8).

2. Système selon la revendication 1,
comprenant un des suivants : une installation de distillation, une installation de valorisation, une raffinerie de pétrole, un dispositif de production de chaleur, une chaudière pour la production de vapeur, et un système pour la production d'au moins un engrais.

3. Système selon la revendication 1 ou 2, comprenant en outre une centrale électrique à cycle combiné (6).

4. Système selon la revendication 3, dans laquelle
l'au moins une centrale électrique à gaz à cycle combiné (6) comprend une turbine à gaz, une turbine à vapeur, un générateur de vapeur (chaudière) et un générateur d'énergie électrique, le système de contrôle (11) étant configuré pour commander et contrôler au moins un des suivants : a) procédés de combustion, et gaz de fumée (7) en découlant, b) production de vapeur connexe, c) production de chaleur connexe, d) nébulisation de l'au moins une turbine à gaz, e) compression humide (7).

5. Système selon une quelconque des revendications précédentes,
comprenant en outre une structure à colonne montante pour amener les hydrocarbures jusqu'à l'installation.

6. Système selon une quelconque des revendications précédentes,
au moins un des sous-systèmes (1 - 10) étant situé sous la mer.

7. Système selon une quelconque des revendications précédentes,
au moins un des sous-systèmes (1 - 10) étant représenté par un module indépendant.

8. Système selon une quelconque des revendications précédentes,
l'installation faisant partie d'un réseau comprenant au moins ladite installation et au moins une activité industrielle offshore ou à terre interconnectée par des pipelines et/ou des dispositifs ou câbles de transmission de l'énergie électrique.

9. Système selon la revendications 8,
le réseau étant une combinaison quelconque d'interconnexions en série, en parallèle, ou en étoile.

10. Système selon la revendications 8,
les pipelines dans le réseau étant configurées pour le transport de gaz de fumée, de CO₂, de produits ou composants pétroliers raffinés, de gaz, de pétrole, de chaleur et/ou de vapeur, et les dispositifs ou câbles de transmission électrique étant configurés pour le transfert d'énergie électrique.

11. Système selon la revendications 8,
au moins un des suivants : a) dispositifs de transmission électrique ou b) pipelines étant adapté pour les communications à l'aide de signaux électroniques, acoustiques ou optiques.

12. Système selon une quelconque des revendications précédentes
l'installation de stockage comprenant un réservoir ou une caverne, et le système de contrôle et guidage (11) étant configuré pour fermer partiellement ou entièrement l'injection de gaz de fumée dans l'installation de stockage.

13. Système selon une quelconque des revendications précédentes,
comprenant en outre une unité CSC pour capturer une proportion significative de CO₂ dans le gaz de fumée.

14. Système selon une quelconque des revendications précédentes,
au moins un des sous-systèmes ou modules (1 - 10) pouvant être contrôlé manuellement.

15. Méthode de régulation d'une installation et de traitement de gaz de fumée provenant de l'installation, et un réseau,
- l'installation et le réseau faisant partie d'un système selon la revendication 1 ; la méthode comprenant :
- la production d'un produit pétrochimique, de chaleur, de vapeur, d'engrais, ou de ciment utilisant l'activité industrielle (5) de l'installation ;
- l'injection de gaz de fumée de l'activité industrielle (5) à l'installation de stockage (8) en utilisant au moins une structure à colonne montante, la méthode comprenant en outre l'exécution des étapes suivantes en utilisant le système de contrôle et guidage (11), en temps réel,
- mesure d'une demande pour l'activité industrielle (5),
- mesure d'une demande pour la fourniture de gaz de fumée provenant du réseau,
- réception de gaz de fumée du réseau,
- fourniture de la charge de départ provenant desdits : unité mobile, installations de stockage (3), pipelines, ou réservoir(s) ou puits (1) pour l'alimentation de l'activité industrielle (5), et
- contrôle de l'injection de gaz de fumée de l'activité industrielle (5) dans l'installation de stockage (8), en temps réel, et
- régulation de l'injection de gaz de fumée de l'activité industrielle (5) dans l'installation de stockage (8), en temps réel.
